# EUROPEAN PATENT SPECIFICATION

(11) **EP 4 662 766 B1**
(45) Date of publication and mention of the grant of the patent: **02.09.2026**
(21) Application number: 24704776.4
(22) Date of filing: 09.02.2024
(51) Int. Cl.: H02K 1/24

(54) **SYNCHRONOUS RELUCTANCE MOTOR ROTOR**
SYNCHRONER RELUKTANZMOTORROTOR
ROTOR DE MOTEUR À RÉLUCTANCE SYNCHRONE

(30) Priority: 10.02.2023 CN 202320191641 U
(43) Date of publication of application: 17.12.2025
(73) Proprietor: Schaeffler Technologies AG & Co. KG, 91074 Herzogenaurach (DE)
(72) Inventor: WANG, Xiangwu, 80687 München (DE); LIU, Pengpeng, 80687 München (DE); LIU, Jiarui, 80687 München (DE); ZHANG, Guorui, 80687 München (DE)
(74) Representative: Schaeffler Technologies
(86) International application number: PCT/EP2024/053359
(87) International publication number: WO 2024/165747

(56) References cited:
- US-A1- 2017 019 006
- US-A1- 2019 173 336
- US-A1- 2020 343 798
- OZDIL ALI ET AL: "Finite Element Analyses of a TLA-type Synchronus Reluctance Machine", 2022 INTERNATIONAL CONFERENCE ON ELECTRICAL, COMPUTER, COMMUNICATIONS AND MECHATRONICS ENGINEERING (ICECCME), IEEE, 16 November 2022 (2022-11-16), pages 1 - 5, XP034262418, DOI: 10.1109/ICECCME55909.2022.9988209

## Description

### Technical Field

The present patent application relates to the technical field of electric machines, in particular to a synchronous reluctance motor rotor.

### Background Art

In order to reduce the use of rare earth permanent magnets and reduce electric machine costs, more and more attention is being paid to electric machines with no permanent magnets or few permanent magnets, and the synchronous reluctance motor is one of these. A synchronous reluctance motor is a motor in which the difference in inductance between the D axis and Q axis of the motor is utilized to generate a reluctance torque to drive the rotor and thus drive the rotation shaft to rotate. The operation of a synchronous reluctance motor follows the "principle of least reluctance", with a positive correlation between the motor output torque and the difference in inductance between the D axis and Q axis. To obtain greater torque, a large number of magnetic barriers will be machined on the rotor. At present, conventional magnetic barriers have the shape of a circular arc. Although circular-arc-shaped magnetic barriers are structurally simple, their output performance is low.

OZDIL ALI et al: "Finite Elemente Analyses of a TLA-type Synchronus Reluctance Machine", 2022 International Conference on Electrical, Computer, Communications and Mechatronics Engineering (ICECCME), IEEE, 16 November 2022 (2022-11-26), pages 1-5, XP034262418, DOI: 10.1109/ICECCME55909.2022.9988209, describes a study optimizing a transversely laminated anisotropic synchronous reluctance motor using finite element analysis. It finds that a design with four hyperbolic-shaped flux barriers offers the best overall performance - delivering higher torque output, high efficiency, improved power factor, and reduced torque ripple compared to other barrier configurations.

US 2020 / 0 343 798 A1 describes a rotor for a synchronous reluctance motor with multiple radial flux-barrier layers shaped in a hyperbolic profile. The outermost flux barrier is filled with a non-magnetic conductive material to provide self-starting induction torque while preserving high reluctance torque, achieved by optimizing the barrier's inner edge position.

US 2017 / 0 019 006 A1 discloses a synchronous reluctance motor rotor having multiple circular-arc flux barriers separated by band-shaped magnetic paths. Mechanical bridges connect adjacent flux barriers but are staggered on different radial lines to prevent straight alignment, which reduces interlayer magnetic leakage and maintains high torque and good power factor.

US 2019 / 0 173 336 A1 reveals a reluctance motor rotor that embeds permanent magnets in its flux barriers to enhance saliency without inducing unwanted voltages in the stator. The magnets are dimensioned and oriented to saturate the rotor's iron bridges magnetically, thereby boosting reluctance torque and efficiency while avoiding no-load losses.

### Summary of the Patent Application

An object of the present patent application is to solve the problem of low output torque of existing circular-arc-shaped magnetic barriers. The present patent application provides a synchronous reluctance motor rotor; under the same input conditions, the maximum torque of this solution can be markedly increased in comparison with the prior art.

To solve the abovementioned technical problem, the present invention is defined in claim 1 as a synchronous reluctance motor rotor, comprising a rotor, the rotor being provided with multiple magnetic barrier sets in a circumferential direction; in a radial direction, each said magnetic barrier set consists of a first magnetic barrier region, a second magnetic barrier region, a third magnetic barrier region and a fourth magnetic barrier region, in sequence from the outside to the inside; in an axial direction, a first outer contour line and a first inner contour line of a projection of the first magnetic barrier region each have the shape of a circular arc, while outer contour lines and inner contour lines of projections of the second magnetic barrier region, the third magnetic barrier region and the fourth magnetic barrier region each have the shape of a single-branched hyperbola.

Using the technical solution described above, under input conditions of the same windings, no other magnetic material added, and the application of the same DC voltage and maximum current, the maximum torque of the present solution is markedly increased in comparison with other prior art, and consequently the performance of the synchronous reluctance motor is markedly improved.

According to another particular embodiment of the present patent application, the second magnetic barrier region, the third magnetic barrier region and the fourth magnetic barrier region each comprise single branches of two hyperbolas, distributed from the outside to the inside in the radial direction.

According to another particular embodiment of the present patent application, a first connecting bridge, a second connecting bridge and a third connecting bridge are provided at positions in the middle of the second magnetic barrier region, the third magnetic barrier region and the fourth magnetic barrier region, respectively; the first connecting bridge, the second connecting bridge and the third connecting bridge lie on a first connecting line, and the second magnetic barrier region comprises a first part and a second part arranged symmetrically along the first connecting line; the third magnetic barrier region comprises a first part and a second part arranged symmetrically along the first connecting line; and the fourth magnetic barrier region comprises a first part and a second part arranged symmetrically along the first connecting line.

According to another particular embodiment of the present patent application, the first parts and the second parts corresponding to the second magnetic barrier region, the third magnetic barrier region and the fourth magnetic barrier region each comprise a first side edge and a second side edge, the first side edges being boundary lines of the first connecting bridge, the second connecting bridge and the third connecting bridge in the circumferential direction, and the second side edges being provided at positions on the rotor near an outer edge in the radial direction.

According to another particular embodiment of the present patent application, a width of the first connecting bridge is a first width, a width of the second connecting bridge is a second width, and a width of the third connecting bridge is a third width, wherein the third width is greater than the second width, and the second width is greater than the first width.

According to another particular embodiment of the present patent application, the first magnetic barrier region, the second magnetic barrier region, the third magnetic barrier region and the fourth magnetic barrier region all have different widths.

According to another particular embodiment of the present patent application, the first part of the second magnetic barrier region has a different width at each position thereon, and the second part of the second magnetic barrier region has a different width at each position thereon; the first part of the third magnetic barrier region has a different width at each position thereon, and the second part of the third magnetic barrier region has a different width at each position thereon; the first part of the fourth magnetic barrier region has a different width at each position thereon, and the second part of the fourth magnetic barrier region has a different width at each position thereon; and the first parts and the second parts corresponding to the second magnetic barrier region, the third magnetic barrier region and the fourth magnetic barrier region become wider as the first connecting line is approached.

According to another particular embodiment of the present patent application, eight said magnetic barrier sets are provided.

According to another particular embodiment of the present patent application, the first magnetic barrier region, the second magnetic barrier region, the third magnetic barrier region and the fourth magnetic barrier region are all air magnetic barriers.

According to another particular embodiment of the present patent application, a second connecting line is further included, the second connecting line being perpendicular to the first connecting line; the second magnetic barrier region comprises a second inner contour line and a second outer contour line, the third magnetic barrier region comprises a third inner contour line and a third outer contour line, and the fourth magnetic barrier region comprises a fourth inner contour line and a fourth outer contour line; if the first connecting line is defined as an X axis and the second connecting line as a Y axis, then
there are two foci F₁ (-c₁,0) and F₂ (+c₁,0) on the first connecting line, and any point M₁ on the second inner contour line can satisfy: $\left|\left|{M}_{1}{F}_{1}\right|-\left|{M}_{1}{F}_{2}\right|\right| = 2 {a}_{1} , wherein , 0 < 2 {a}_{1} < \left|{F}_{1}{F}_{2}\right|$
there are two foci F₃ (-c₂,0) and F₄ (+c₂,0) on the first connecting line, and any point M₂ on the second outer contour line can satisfy: $\left|\left|{M}_{2}{F}_{3}\right|-\left|{M}_{2}{F}_{4}\right|\right| = 2 {a}_{2} , wherein , 0 < 2 {a}_{2} < \left|{F}_{3}{F}_{4}\right| ;$
there are two foci Fs (-c₃,0) and F₆ (+c₃,0) on the first connecting line, and any point M₃ on the third inner contour line can satisfy: $\left|\left|{M}_{3}{F}_{5}\right|-\left|{M}_{3}{F}_{6}\right|\right| = 2 {a}_{3} , wherein , 0 < 2 {a}_{3} < \left|{F}_{5}{F}_{6}\right|$
similarly, there are two foci F₇ (-c₄,0) and F₈ (+c₄,0) on the first connecting line, and any point M₄ on the third outer contour line can satisfy: $\left|\left|{M}_{4}{F}_{7}\right|-\left|{M}_{4}{F}_{8}\right|\right| = 2 {a}_{4} , wherein , 0 < 2 {a}_{4} < \left|{F}_{7}{F}_{8}\right|$
there are two foci F₉ (-c₅,0) and F₁₀ (+cs,0) on the first connecting line, and any point Ms on the fourth inner contour line can satisfy: $\left|\left|{M}_{5}{F}_{9}\right|-\left|{M}_{5}{F}_{10}\right|\right| = 2 {a}_{5} , wherein , 0 < 2 {a}_{5} < \left|{F}_{9}{F}_{10}\right|$
there are two foci F₁₁ (-c₅,0) and F₁₂ (+cs,0) on the first connecting line, and any point M₆ on the fourth outer contour line can satisfy: $\left|\left|{M}_{6}{F}_{11}\right|-\left|{M}_{6}{F}_{12}\right|\right| = 2 {a}_{6} , wherein , 0 < 2 {a}_{6} < \left|{F}_{11}{F}_{12}\right| .$

### Brief Description of the Drawings

Fig. 1 shows a schematic drawing of a rotor magnetic barrier set in an embodiment of the present patent application in its entirety.
Fig. 2 shows a schematic drawing of a single magnetic barrier set in an embodiment of the present patent application.
Fig. 3 shows a schematic drawing of a single magnetic barrier set in an embodiment of the present patent application.

Key to the drawings: 1. rotor; 101. magnetic barrier set; 2. first magnetic barrier region; 3. second magnetic barrier region; 301. first connecting bridge; 302. first part; 303. second part; 3020. first side edge; 3030. second side edge; 4. third magnetic barrier region; 401. second connecting bridge; 402. first part; 403. second part; 4020. first side edge; 4030. second side edge; 5. fourth magnetic barrier region; 501. third connecting bridge; 502. first part; 503. second part; 5020. first side edge; 5030. second side edge; A. first outer contour line; B. first inner contour line; C. first connecting line; D. second connecting line; E. second inner contour line; F. second outer contour line; G. third inner contour line; H. third outer contour line; I. fourth inner contour line; J. fourth outer contour line; W₁. first width; W₂. second width; W₃. third width.

### Detailed Description of the Invention

Ways of implementing the present patent application are explained below by way of specific embodiments, and those skilled in the art will be able to easily understand other advantages and effects of the present patent application from the content disclosed herein. Although the description of the present patent application will be presented in conjunction with preferred embodiments, this does not mean that the features of the present patent application are limited to these embodiments. On the contrary, the purpose of presenting the patent application in conjunction with embodiments is to cover other choices or modifications that might be derived on the basis of the claims of the present patent application. In order to provide in-depth understanding of the present patent application, the description below will include many specific details. The present patent application may also be implemented without these details. Additionally, to avoid confusing or obfuscating the key points of the present patent application, some specific details will be omitted in the description. It must be explained that where no conflict arises, embodiments in the present patent application may be combined, and features in embodiments may be combined.

It should be noted that in this Description, similar labels and letters denote similar terms in the drawings below; therefore, if a term is defined in one drawing, there is no need to further define and explain it in subsequent drawings.

In the description of the present embodiment, it must be explained that directional or positional relationships indicated by the terms "upper", "lower", "inner" and "bottom", etc. are based on directional or positional relationships shown in the drawings, or are directional or positional relationships in usual placement of the present patent application product when in use, and are merely intended to facilitate description of the present patent application and simplify description; they do not indicate or imply that the apparatus or element referred to must have a specific direction and be constructed and operated in a specific direction, and therefore cannot be interpreted as restrictions on the present patent application.

The terms "first", "second", etc. merely serve a distinguishing purpose in description, and must not be interpreted as indicating or implying relative importance.

In the description of the present embodiment, it must also be explained that unless otherwise clearly specified and defined, the terms "disposed", "connected together" and "connected" should be interpreted in a broad sense, e.g. they may indicate a fixed connection, or a detachable connection, or an integral connection; they may indicate a mechanical connection, or an electrical connection; they may indicate a direct connection, or an indirect connection via an intermediate medium, or internal communication between two elements. Those skilled in the art can interpret the specific meaning of the abovementioned terms in the present embodiment according to the particular circumstances.

To clarify the object, technical solution and advantages of the present patent application, embodiments of the present patent application are described in further detail below with reference to the drawings.

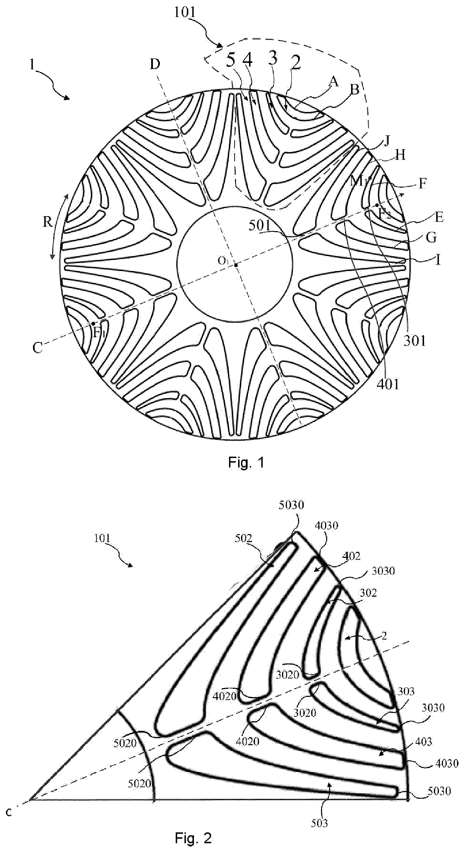

Referring to Fig. 1, the present application provides a synchronous reluctance motor rotor, comprising a rotor 1, the rotor 1 being provided with multiple magnetic barrier sets 101 in a circumferential direction (indicated by direction R in Fig. 1). In a radial direction, each magnetic barrier set 101 consists of a first magnetic barrier region 2, a second magnetic barrier region 3, a third magnetic barrier region 4 and a fourth magnetic barrier region 5, in sequence from the outside to the inside. In an axial direction, a first outer contour line A and a first inner contour line B of a projection of the first magnetic barrier region 2 each have the shape of a circular arc, while outer contour lines (F, **H,** G) and inner contour lines (E, G, I) of projections of the second magnetic barrier region 3, third magnetic barrier region 4 and fourth magnetic barrier region 5 each have the shape of a single-branched hyperbola. Demonstratively, the first magnetic barrier region 2 and second magnetic barrier region 3 are separated by a set distance, the second magnetic barrier region 3 and third magnetic barrier region 4 are separated by a set distance, and the third magnetic barrier region 4 and fourth magnetic barrier region 5 are separated by a set distance.

Demonstratively, referring to Fig. 1, eight magnetic barrier sets 101 are provided. The rotor 1 is an eight-pole structure, so eight magnetic barrier sets 101 are provided, i.e. each magnetic barrier set 101 is 45 degrees.

To prove that the synchronous reluctance motor rotor provided in the present embodiment can improve the effect of the torque output capability of the synchronous reluctance motor, the applicant performed a comparative analysis of output torques, using various conventional magnetic barrier structures as Comparative examples and magnetic barrier shapes of the synchronous reluctance motor rotor in embodiments of the present application as Examples; see Table 1 for the results.

**Table 1: Comparison of output torques of magnetic barrier sets in Structure 1, Structure 3 and an embodiment of the present application (Structure 2)**

| | Structure 1 | Structure 2 | Structure 3 |
|---|---|---|---|
| Magnetic barrier shape | 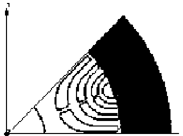 | 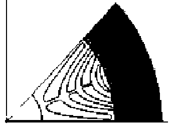 | 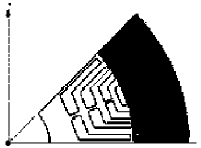 |
| Winding | Δ | Δ | Δ |
| Magnetic material | / | / | / |
| DC voltage (V) | 350 | 350 | 350 |
| Maximum current | 550A | 550A | 550A |
| Maximum torque | 123.9Nm | 142.5Nm | 122.8Nm |
| Torque ripple | 6Nm | 8.2Nm | 7.3Nm |
| Torque ripple ratio | 4.8% | 5.8% | 5.9% |
| Maximum power | - | 86kW | - |

Using the technical solution described above, referring to Table 1, Table 1 shows three magnetic barrier structures, wherein the rotor magnetic barrier shape indicated by Structure 1 is a circular arc shape, the rotor magnetic barrier shape indicated by Structure 3 is a polyline shape, and Structure 2 is rotor magnetic barriers with the hyperbolic shape of the present solution. Comparing Structure 1, Structure 3 and the structure of the present solution (Structure 2 in Table 1), the results show that under input conditions of the same windings, no other magnetic material added, and the application of the same DC voltage and maximum current, the maximum torque of Structure 2 of the present solution shown in Table 1 is greater than the maximum torques of Structure 1 and Structure 3. That is to say, the results of the simulation experiment show that compared with other magnetic barrier structures, the magnetic barrier structure of the present solution has markedly increased reluctance torque, and consequently the performance of the synchronous reluctance motor is markedly improved.

In some possible embodiments, referring to Fig. 1, the second magnetic barrier region 3, third magnetic barrier region 4 and fourth magnetic barrier region 5 each comprise single branches of two hyperbolas, distributed from the outside to the inside in a radial direction. That is, the second magnetic barrier region 3 comprises single branches of two different hyperbolas, i.e. the second inner contour line E and second outer contour line F; the third magnetic barrier region 4 comprises single branches of two different hyperbolas, i.e. the third inner contour line G and third outer contour line H; and the fourth magnetic barrier region 5 comprises single branches of two different hyperbolas, i.e. the fourth inner contour line I and fourth outer contour line J. It was found in the simulation experiment that the combination of the second magnetic barrier region 3, the third magnetic barrier region 4 and the fourth magnetic barrier region 5 in the shape of single branches of hyperbolas and the first magnetic barrier region 1 in the shape of a circular arc in the present solution had greater reluctance torque and better output performance than magnetic barriers of other shapes.

In some possible embodiments, referring to Figs. 1 and 2, a first connecting bridge 301, a second connecting bridge 401 and a third connecting bridge 501 are provided at positions in the middle of the second magnetic barrier region 3, the third magnetic barrier region 4 and the fourth magnetic barrier region 5, respectively. The first connecting bridge 301, second connecting bridge 401 and third connecting bridge 501 lie on a first connecting line (e.g. C shown in Fig. 1), and the second magnetic barrier region 3 comprises a first part 302 and a second part 303 arranged symmetrically along the first connecting line (e.g. C shown in Fig. 1); the third magnetic barrier region 4 comprises a first part 402 and a second part 403 arranged symmetrically along the first connecting line (e.g. C shown in Fig. 1); and the fourth magnetic barrier region 5 comprises a first part 502 and a second part 503 arranged symmetrically along the first connecting line (e.g. C shown in Fig. 1).

Thus, the first connecting line (e.g. C shown in Fig. 1) divides each of the second magnetic barrier region 3, the third magnetic barrier region 4 and the fourth magnetic barrier region 5 into two symmetrical parts, i.e. first parts (302, 402, 502) and second parts (303, 403, 503); and since the first magnetic barrier region 1 is not provided with a connecting bridge, the first magnetic barrier region 1 is a complete circular arc shape. Demonstratively, during operation of the synchronous reluctance motor, the rotor 1 rotates at high speed, and the rotation of the rotor 1 will give rise to a centrifugal force; the first connecting bridge 301, second connecting bridge 401 and third connecting bridge 501 can increase the mechanical strength of the rotor 1, preventing the rotor 1 from developing problems during high-speed rotation due to the rotor 1 having insufficient mechanical strength.

In some possible embodiments, referring to Figs. 1 and 2, the first part 302 and second part 303 of the second magnetic barrier region 3 each comprise a first side edge 3020 and a second side edge 3030, the first side edges 3020 being two boundary lines of the first connecting bridge 301 in the circumferential direction (indicated by direction R in Fig. 1); the first part 402 and second part 403 of the third magnetic barrier region 4 each comprise a first side edge 4020 and a second side edge 4030, the first side edges 4020 being two boundary lines of the second connecting bridge 401 in the circumferential direction; and the first part 502 and second part 503 of the fourth magnetic barrier region 5 each comprise a first side edge 5020 and a second side edge 5030, the first side edges 5020 being two boundary lines of the third connecting bridge 501 in the circumferential direction. The second side edges (3030, 4030, 5030) are provided at positions on the rotor 1 near an outer edge in a radial direction.

The first side edges 3020, the second side edges 3030, the second inner contour line E and the second outer contour line F form the complete and closed first part 302 and second part 303 of the second magnetic barrier region 3; likewise, the first side edges 4020, the second side edges 4030, the third inner contour line G and the third outer contour line H form the complete and closed first part 402 and second part 403 of the third magnetic barrier region 4; and the first side edges 5020, the second side edges 5030, the fourth inner contour line I and the fourth outer contour line J form the complete and closed first part 502 and second part 503 of the fourth magnetic barrier region 5. Demonstratively, the first connecting bridge 301, the second connecting bridge 401 and the third connecting bridge 501 effectively increase the mechanical strength of the rotor 1.

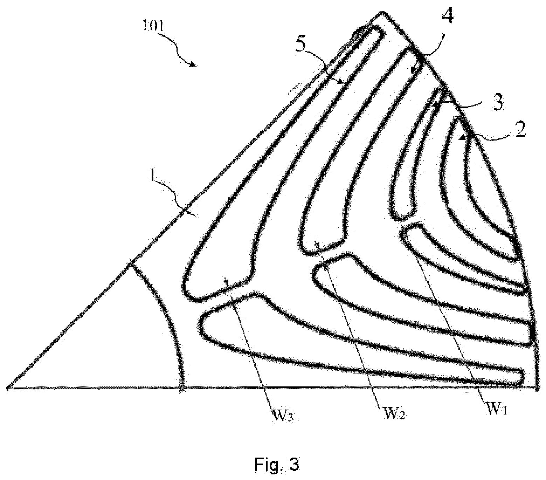

**In** some possible embodiments, referring to Figs. 1 and 3, a width of the first connecting bridge 301 is a first width W₁, a width of the second connecting bridge 401 is a second width W₂, and a width of the third connecting bridge 501 is a third width W₃, wherein the third width W₃ is greater than the second width W₂, and the second width W₂ is greater than the first width W₁. Demonstratively, since the third connecting bridge 501 is closest to the axis of the rotor 1, it is subject to the greatest centrifugal force, and has the greatest influence on the structural strength of the rotor 1. **In** the present solution, by configuring the third connecting bridge 501 to have the greatest width, compared with the rotor of a conventional synchronous reluctance motor in which all of the connecting bridges in the same magnetic barrier set have the same width, this configuration results in the third connecting bridge 501 of the fourth magnetic barrier region 5, at the position closest to the axis of the rotor 1 where the sustained force is greatest, having the greatest width, thus ensuring the structural strength of the rotor 1.

Correspondingly, remote from the axis of the rotor 1, the widths of the second connecting bridge 401 and first connecting bridge 301 corresponding to the third magnetic barrier region 401 and second magnetic barrier region 301, which are subject to smaller forces, are correspondingly reduced, and the first magnetic barrier region 2 provided closest to the edge of the rotor 1 is not provided with a first connecting bridge. The smaller the width of the connecting bridge, the better the magnetic isolation effect, i.e. the less the magnetic leakage; therefore, the problem of magnetic leakage in the rotor 1 is reduced effectively, thus making it possible to increase the torque output capability of the synchronous reluctance motor while ensuring the corresponding structural strength of the rotor 1.

In some possible embodiments, referring to Fig. 3, the first magnetic barrier region 2, the second magnetic barrier region 3, the third magnetic barrier region 4 and the fourth magnetic barrier region 5 all have different widths. Demonstratively, by configuring the widths of the first magnetic barrier region 2, the second magnetic barrier region 3, the third magnetic barrier region 4 and the fourth magnetic barrier region 5 to all be different and have the characteristic of changing gradually, it is possible to effectively increase the saliency ratio of the motor, and increase the motor output torque.

In some possible embodiments, referring to Figs. 1 and 2, the first part 302 of the second magnetic barrier region 3 has a different width at each position thereon, and the second part 303 of the second magnetic barrier region 3 has a different width at each position thereon; the first part 402 of the third magnetic barrier region 4 has a different width at each position thereon, and the second part 403 of the third magnetic barrier region 4 has a different width at each position thereon; the first part 502 of the fourth magnetic barrier region 5 has a different width at each position thereon, and the second part 503 of the fourth magnetic barrier region 5 has a different width at each position thereon; and the first parts (302, 402, 502) and second parts (303, 403, 503) corresponding to the second magnetic barrier region 3, the third magnetic barrier region 4 and the fourth magnetic barrier region 5 become wider as the first connecting line (e.g. C shown in Fig. 1) is approached. Demonstratively, this configuration can reduce high torque ripple caused in the motor by the magnetic pulling force generated by the stator and the rotor, thus increasing the stability of motor operation.

In some possible embodiments, referring to Fig. 1, the first magnetic barrier region 2, the second magnetic barrier region 3, the third magnetic barrier region 4 and the fourth magnetic barrier region 5 are all air magnetic barriers, i.e. the first magnetic barrier region 2, the second magnetic barrier region 3, the third magnetic barrier region 4 and the fourth magnetic barrier region 5 are through-holes of hyperbolic shape in the rotor 1. Demonstratively, providing air magnetic barriers can have a certain magnetic isolation effect, and is low-cost.

In some possible embodiments, referring to Fig. 1, a second connecting line D is further included, the second connecting line D being perpendicular to the first connecting line C; the second magnetic barrier region 3 comprises the second inner contour line E and second outer contour line F, the third magnetic barrier region 4 comprises the third inner contour line G and third outer contour line H, and the fourth magnetic barrier region 5 comprises the fourth inner contour line I and fourth outer contour line J. If the first connecting line C is defined as the X axis and the second connecting line D as the Y axis, then
there are two foci F₁ (-c₁,0) and F₂ (+c₁,0) on the first connecting line C, and any point M₁ on the second inner contour line E can satisfy: $\left|\left|{M}_{1}{F}_{1}\right|-\left|{M}_{1}{F}_{2}\right|\right| = 2 {a}_{1} , wherein , 0 < 2 {a}_{1} < \left|{F}_{1}{F}_{2}\right|$
there are two foci F₃ (-c₂,0) and F₄ (+c₂,0) on the first connecting line C, and any point M₂ on the second outer contour line F can satisfy: $\left|\left|{M}_{2}{F}_{3}\right|-\left|{M}_{2}{F}_{4}\right|\right| = 2 {a}_{2} , wherein , 0 < 2 {a}_{2} < \left|{F}_{3}{F}_{4}\right| ;$
there are two foci Fs (-c₃,0) and F₆ (+c₃,0) on the first connecting line C, and any point M₃ on the third inner contour line G can satisfy: $\left|\left|{M}_{3}{F}_{5}\right|-\left|{M}_{3}{F}_{6}\right|\right| = 2 {a}_{3} , wherein , 0 < 2 {a}_{3} < \left|{F}_{5}{F}_{6}\right| ;$
similarly, there are two foci F₇ (-c₄,0) and F₈ (+c₄,0) on the first connecting line C, and any point M₄ on the third outer contour line H can satisfy: $\left|\left|{M}_{4}{F}_{7}\right|-\left|{M}_{4}{F}_{8}\right|\right| = 2 {a}_{4} , wherein , 0 < 2 {a}_{4} < \left|{F}_{7}{F}_{8}\right| ;$
there are two foci F₉ (-c₅,0) and F₁₀ (+cs,0) on the first connecting line C, and any point Ms on the fourth inner contour line I can satisfy: $\left|\left|{M}_{5}{F}_{9}\right|-\left|{M}_{5}{F}_{10}\right|\right| = 2 {a}_{5} , wherein , 0 < 2 {a}_{5} < \left|{F}_{9}{F}_{10}\right| ;$
there are two foci F₁₁ (-c₅,0) and F₁₂ (+c₆,0) on the first connecting line C, and any point M₆ on the fourth outer contour line J can satisfy: $\left|\left|{M}_{6}{F}_{11}\right|-\left|{M}_{6}{F}_{12}\right|\right| = 2 {a}_{6} , wherein , 0 < 2 {a}_{6} < \left|{F}_{11}{F}_{12}\right| .$

Thus, all of the inner and outer contour lines of the second magnetic barrier region 3, the third magnetic barrier region 4 and the fourth magnetic barrier region 5 in the present solution must satisfy the parameter equations above which they respectively correspond to; and it is determined by simulation experiment that the combination of the circular-arc-shaped first magnetic barrier region 2 and the second magnetic barrier region 3, the third magnetic barrier region 4 and the fourth magnetic barrier region 5 satisfying the abovementioned conditions in the present solution has greater reluctance torque and better output performance than circular-arc-shaped magnetic barriers and structures in the prior art.

Although the present patent application has been illustrated and described by referring to some preferred embodiments thereof, those skilled in the art should understand that the above content is a more detailed explanation of the present patent application given in conjunction with specific embodiments, and it cannot be determined that specific implementation of the present patent application is limited to these explanations. The scope of the invention is defined by the appended claims.

## Claims

1. A synchronous reluctance motor rotor, comprising
- a rotor (1), the rotor (1) being provided with multiple magnetic barrier sets (101) in a circumferential direction;
- in a radial direction, each said magnetic barrier set (101) consists of a first magnetic barrier region (2), a second magnetic barrier region (3), a third magnetic barrier region (4) and a fourth magnetic barrier region (5), in sequence from the outside to the inside;
- in an axial direction, a first outer contour line (A) and a first inner contour line (B) of a projection of the first magnetic barrier region (2) each have the shape of a circular arc, **characterized in that** the outer contour lines (F, H, J) and inner contour lines (E, G, I) of projections of the second magnetic barrier region (3), the third magnetic barrier region (4) and the fourth magnetic barrier region (5) each have the shape of a single-branched hyperbola.

2. The synchronous reluctance motor rotor as claimed in claim 1, **characterized in that** the second magnetic barrier region (3), the third magnetic barrier region (4) and the fourth magnetic barrier region (5) each comprise single branches of two hyperbolas, distributed from the outside to the inside in the radial direction.

3. The synchronous reluctance motor rotor as claimed in one of the previous claims, **characterized in that** a first connecting bridge (301), a second connecting bridge (401) and a third connecting bridge (501) are provided at positions in the middle of the second magnetic barrier region (3), the third magnetic barrier region (4) and the fourth magnetic barrier region (5), respectively, wherein the first connecting bridge (301), the second connecting bridge (401) and the third connecting bridge (501) lie on a first connecting line (C), and the second magnetic barrier (3) region comprises a first part (302) and a second part (303)arranged symmetrically along the first connecting line (C); the third magnetic barrier region (4) comprises a first part (402) and a second part (403) arranged symmetrically along the first connecting line (C); and the fourth magnetic barrier region (5) comprises a first part (502) and a second part (503) arranged symmetrically along the first connecting line (C).

4. The synchronous reluctance motor rotor as claimed in claim 3, **characterized in that** the first parts (302, 402, 502) and the second parts (303, 403, 503) corresponding to the second magnetic barrier region (3), the third magnetic barrier region (4) and the fourth magnetic barrier region (5) each comprise a first side edge (3020, 4020, 5020) and a second side edge (3030, 4030, 5030), the first side edges (3020, 4020, 5020) being boundary lines of the first connecting bridge (301), the second connecting bridge (401) and the third connecting bridge (501) in the circumferential direction, and the second side edges (3030, 4030, 5030) being provided at positions on the rotor (1) near an outer edge in the radial direction.

5. The synchronous reluctance motor rotor as claimed in claim 3 or 4, **characterized in that** a width of the first connecting bridge (301) is a first width (W₁), a width of the second connecting bridge (401) is a second width (W₂), and a width of the third connecting bridge (501) is a third width (W₃), wherein the third width (W₃) is greater than the second width (W₂), and the second width (W₂) is greater than the first width (W₁).

6. The synchronous reluctance motor rotor as claimed in of the previous claims, **characterized in that** the first magnetic barrier region (2), the second magnetic barrier region (3), the third magnetic barrier region (4) and the fourth magnetic barrier (5) region all have different widths.

7. The synchronous reluctance motor rotor as claimed in claim 3 or 4, **characterized in that** the first part (302) of the second magnetic barrier region (3) has a different width at each position thereon, and the second part (303) of the second magnetic barrier region (3) has a different width at each position thereon; the first part (402) of the third magnetic barrier region (4) has a different width at each position thereon, and the second part (403) of the third magnetic barrier region (4) has a different width at each position thereon; the first part (502) of the fourth magnetic barrier region (5) has a different width at each position thereon, and the second part (503) of the fourth magnetic barrier region (5) has a different width at each position thereon; and the first parts (302, 402, 502) and the second parts (303, 403, 503) corresponding to the second magnetic barrier region (3), the third magnetic barrier region (4) and the fourth magnetic barrier region (5) become wider as the first connecting line is approached.

8. The synchronous reluctance motor rotor as claimed in of the previous claims, **characterized in that** eight said magnetic barrier sets (101) are provided.

9. The synchronous reluctance motor rotor as claimed in of the previous claims, **characterized in that** the first magnetic barrier region (2), the second magnetic barrier region (3), the third magnetic barrier region (4) and the fourth magnetic barrier region (5) are all air magnetic barriers.

10. The synchronous reluctance motor rotor as claimed in of the previous claims, **characterized by** further comprising a second connecting line (D), the second connecting line (D) being perpendicular to the first connecting line (C); the second magnetic barrier region (3) comprises a second inner contour line (E) and a second outer contour line (F), the third magnetic barrier region (4) comprises a third inner contour line (G) and a third outer contour line (H), and the fourth magnetic barrier region (5) comprises a fourth inner contour line (I) and a fourth outer contour line (J); if the first connecting line (C) is defined as an X axis and the second connecting line (D) as a Y axis, then
there are two foci F₁ (-c₁,0) and F₂ (+c₁,0) on the first connecting line (C), and any point M₁ on the second inner contour line (E) can satisfy: $\left|\left|{M}_{1}{F}_{1}\right|-\left|{M}_{1}{F}_{2}\right|\right| = 2 {a}_{1} , wherein , 0 < 2 {a}_{1} < \left|{F}_{1}{F}_{2}\right|$
there are two foci F₃ (-c₂,0) and F₄ (+c₂,0) on the first connecting line (C), and any point M₂ on the second outer contour line (F) can satisfy: $\left|\left|{M}_{2}{F}_{3}\right|-\left|{M}_{2}{F}_{4}\right|\right| = 2 {a}_{2} , wherein , 0 < 2 {a}_{2} < \left|{F}_{3}{F}_{4}\right| ;$
there are two foci F₅ (-c₃,0) and F₆ (+c₃,0) on the first connecting line (C), and any point M₃ on the third inner contour line (G) can satisfy: $\left|\left|{M}_{3}{F}_{5}\right|-\left|{M}_{3}{F}_{6}\right|\right| = 2 {a}_{3} , wherein , 0 < 2 {a}_{3} < \left|{F}_{5}{F}_{6}\right| ;$
there are two foci F₇ (-c₄,0) and F₈ (+c₄,0) on the first connecting line (C), and any point M₄ on the third outer contour line (H) can satisfy: $\left|\left|{M}_{4}{F}_{7}\right|-\left|{M}_{4}{F}_{8}\right|\right| = 2 {a}_{4} , wherein , 0 < 2 {a}_{4} < \left|{F}_{7}{F}_{8}\right| ;$
there are two foci F₉ (-c₅,0) and F₁₀ (+c₅,0) on the first connecting line (C), and any point M₅ on the fourth inner contour line (I) can satisfy: $\left|\left|{M}_{5}{F}_{9}\right|-\left|{M}_{5}{F}_{10}\right|\right| = 2 {a}_{5} , wherein , 0 < 2 {a}_{5} < \left|{F}_{9}{F}_{10}\right| ;$
there are two foci F₁₁ (-c₅,0) and F₁₂ (+c₆,0) on the first connecting line (C), and any point M₆ on the fourth outer contour line (J) can satisfy: $\left|\left|{M}_{6}{F}_{11}\right|-\left|{M}_{6}{F}_{12}\right|\right| = 2 {a}_{6} , wherein , 0 < 2 {a}_{6} < \left|{F}_{11}{F}_{12}\right| .$

## Patentansprüche

1. Synchronreluktanzmotorrotor, umfassend
- einen Rotor (1), wobei der Rotor (1) in einer Umfangsrichtung mit Magnetbarrieresätzen (101) versehen ist;
- in einer radialen Richtung besteht jeder Magnetbarrieresatz (101) aus einem ersten Magnetbarrierenbereich (2), einem zweiten Magnetbarrierenbereich (3), einem dritten Magnetbarrierenbereich (4) und einem vierten Magnetbarrierenbereich (5) in einer Reihenfolge von außen nach innen;
- in axialer Richtung eine erste Außenkonturlinie (A) und eine erste Innenkonturlinie (B) eines Vorsprungs des ersten Magnetbarrierenbereichs (2), jeweils in Form eines Kreisbogens, **dadurch gekennzeichnet, dass** die Außenkonturlinien (F, H, J) und die Innenkonturlinien (E, G, I) von Vorsprüngen des zweiten Magnetbarrierenbereichs (3), des dritten Magnetbarrierenbereichs (4) und des vierten Magnetbarrierenbereichs (5) jeweils die Form einer Hyperbel mit einem Ast aufweisen.

2. Synchronreluktanzmotorrotor nach Anspruch 1, **dadurch gekennzeichnet, dass** der zweite Magnetbarrierenbereich (3), der dritte Magnetbarrierenbereich (4) und der vierte Magnetbarrierenbereich (5) jeweils einzelne Zweige zweier Hyperbeln umfassen, in radialer Richtung von außen nach innen verteilt.

3. Synchronreluktanzmotorrotor nach einem der vorhergehenden Ansprüche, **dadurch gekennzeichnet, dass** eine erste Verbindungsbrücke (301), eine zweite Verbindungsbrücke (401) und eine dritte Verbindungsbrücke (501) an Positionen in der Mitte des zweiten Magnetbarrierenbereichs (3), des dritten Magnetbarrierenbereichs (4) bzw. des vierten Magnetbarrierenbereichs (5) vorgesehen sind, wobei die erste Verbindungsbrücke (301), die zweite Verbindungsbrücke (401) und die dritte Verbindungsbrücke (501) auf einer ersten Verbindungslinie (C) liegen und der zweite Magnetbarrierenbereich (3) einen ersten Teil (302) und einen zweiten Teil (303) umfasst, die symmetrisch entlang der ersten Verbindungslinie (C) angeordnet sind; der dritte Magnetbarrierenbereich (4) einen ersten Teil (402) und einen zweiten Teil (403) umfasst, die symmetrisch entlang der ersten Verbindungslinie (C) angeordnet sind; und der vierte Magnetbarrierenbereich (5) einen ersten Teil (502) und einen zweiten Teil (503) umfasst, die symmetrisch entlang der ersten Verbindungslinie (C) angeordnet sind.

4. Synchronreluktanzmotorrotor nach Anspruch 3, **dadurch gekennzeichnet, dass** die ersten Teile (302, 402, 502) und die zweiten Teile (303, 403, 503), die dem zweiten Magnetbarrierenbereich (3), dem dritten Magnetbarrierenbereich (4) und dem vierten Magnetbarrierenbereich (5) entsprechen, jeweils eine erste Seitenkante (3020, 4020, 5020) und eine zweite Seitenkante (3030, 4030, 5030) umfassen, wobei die ersten Seitenkanten (3020, 4020, 5020) Begrenzungslinien der ersten Verbindungsbrücke (301), der zweiten Verbindungsbrücke (401) und der dritten Verbindungsbrücke (501) in der Umfangsrichtung sind und die zweiten Seitenkanten (3030, 4030, 5030) an Positionen am Rotor (1) nahe einer Außenkante in radialer Richtung bereitgestellt sind.

5. Synchronreluktanzmotorrotor nach Anspruch 3 oder 4, **dadurch gekennzeichnet, dass** eine Breite der ersten Verbindungsbrücke (301) eine erste Breite (W₁) ist, eine Breite der zweiten Verbindungsbrücke (401) eine zweite Breite (W₂) ist und eine Breite der dritten Verbindungsbrücke (501) eine dritte Breite (W₃) ist, wobei die dritte Breite (W₃) größer ist als die zweite Breite (W₂) und die zweite Breite (W₂) größer ist als die erste Breite (W₁).

6. Synchronreluktanzmotorrotor nach den vorhergehenden Ansprüchen, **dadurch gekennzeichnet, dass** der erste Magnetbarrierenbereich (2), der zweite Magnetbarrierenbereich (3), der dritte Magnetbarrierenbereich (4) und der vierte Magnetbarrierenbereich (5) jeweils unterschiedliche Breiten aufweisen.

7. Synchronreluktanzmotorrotor nach Anspruch 3 oder 4, **dadurch gekennzeichnet, dass** der erste Teil (302) des zweiten Magnetbarrierenbereichs (3) an jeder Position darauf eine unterschiedliche Breite aufweist und der zweite Teil (303) des zweiten Magnetbarrierenbereichs (3) an jeder Position darauf eine unterschiedliche Breite aufweist; der erste Teil (402) des dritten Magnetbarrierenbereichs (4) an jeder Position darauf eine unterschiedliche Breite aufweist und der zweite Teil (403) des dritten Magnetbarrierenbereichs (4) an jeder Position darauf eine unterschiedliche Breite aufweist; der erste Teil (502) des vierten Magnetbarrierenbereichs (5) an jeder Position darauf eine unterschiedliche Breite aufweist und der zweite Teil (503) des vierten Magnetbarrierenbereichs (5) an jeder Position darauf eine unterschiedliche Breite aufweist; und die ersten Teile (302, 402, 502) und die zweiten Teile (303, 403, 503), die dem zweiten Magnetbarrierenbereich (3), dem dritten Magnetbarrierenbereich (4) und dem vierten Magnetbarrierenbereich (5) entsprechen, mit Annäherung an die erste Verbindungslinie breiter werden.

8. Synchronreluktanzmotorrotor nach den vorhergehenden Ansprüchen, **dadurch gekennzeichnet, dass** acht Magnetbarrieresätze (101) vorgesehen sind.

9. Synchronreluktanzmotorrotor nach den vorhergehenden Ansprüchen, **dadurch gekennzeichnet, dass** der erste Magnetbarrierenbereich (2), der zweite Magnetbarrierenbereich (3), der dritte Magnetbarrierenbereich (4) und der vierte Magnetbarrierenbereich (5) jeweils Luftmagnetbarrieren sind.

10. Synchronreluktanzmotorrotor nach den vorhergehenden Ansprüchen, **dadurch gekennzeichnet, dass** er ferner eine zweite Verbindungslinie (D) umfasst, wobei die zweite Verbindungslinie (D) senkrecht zu der ersten Verbindungslinie (C) ist; der zweite Magnetbarrierenbereich (3) eine zweite Innenkonturlinie (E) und eine zweite Außenkonturlinie (F) umfasst, der dritte Magnetbarrierenbereich (4) eine dritte Innenkonturlinie (G) und eine dritte Außenkonturlinie (H) umfasst und der vierte Magnetbarrierenbereich (5) eine vierte Innenkonturlinie (I) und eine vierte Außenkonturlinie (J) umfasst; ist die erste Verbindungslinie (C) als X-Achse und die zweite Verbindungslinie (D) als Y-Achse definiert, dann
liegen zwei Foci F₁ (-c₁,0) und F₂ (+c₁,0) auf der ersten Verbindungslinie (C), und jeder Punkt M₁ auf der zweiten Innenkonturlinie (E) kann erfüllen: $\left|\left|{M}_{1}{F}_{1}\right|-\left|{M}_{1}{F}_{2}\right|\right| = {2 a}_{1} , wobei gilt 0 < 2 {a}_{1} < \left|{F}_{1}{F}_{2}\right|$
liegen zwei Foci F₃ (-c₂,0) und F₄ (+c₂,0) auf der ersten Verbindungslinie (C), und jeder Punkt M₂ auf der zweiten Außenkonturlinie (F) kann erfüllen: $\left|\left|{M}_{2}{F}_{3}\right|-\left|{M}_{2}{F}_{4}\right|\right| = 2 {a}_{2} , wobei gilt 0 < {2 a}_{2} < \left|{F}_{3}{F}_{4}\right| ;$
liegen zwei Foci F₅ (-c₃,0) und F₆ (+c₃,0) auf der ersten Verbindungslinie (C), und jeder Punkt M₃ auf der dritten Innenkonturlinie (G) kann erfüllen: $\left|\left|{M}_{3}{F}_{5}\right|-\left|{M}_{3}{F}_{6}\right|\right| = {2 a}_{3} , wobei gilt 0 < {2 a}_{3} < \left|{F}_{5}{F}_{6}\right| ;$
liegen zwei Foci F₇ (-c₄,0) und F₈ (+c₄,0) auf der ersten Verbindungslinie (C), und jeder Punkt M₄ auf der dritten Außenkonturlinie (H) kann erfüllen: $\left|\left|{M}_{4}{F}_{7}\right|-\left|{M}_{4}{F}_{8}\right|\right| = {2 a}_{4} , wobei gilt 0 < {2 a}_{4} < \left|{F}_{7}{F}_{8}\right| ;$
liegen zwei Foci F₉ (-c₅,0) und F₁₀ (+c₅,0) auf der ersten Verbindungslinie (C), und jeder Punkt M₅ auf der vierten Innenkonturlinie (I) kann erfüllen: $\left|\left|{M}_{5}{F}_{9}\right|-\left|{M}_{5}{F}_{10}\right|\right| = {2 a}_{5} , wobei gilt 0 < {2 a}_{5} < \left|{F}_{9}{F}_{10}\right| ;$
liegen zwei Foci F₁₁ (-c₆,0) und F₁₂ (+c₆,0) auf der ersten Verbindungslinie (C),
und jeder Punkt M₆ auf der vierten Außenkonturlinie (J) kann erfüllen: $\left|\left|{M}_{6}{F}_{11}\right|-\left|{M}_{6}{F}_{12}\right|\right| = {2 a}_{6} , wobei gilt 0 < {2 a}_{6} < \left|{F}_{11}{F}_{12}\right| .$

## Revendications

1. Rotor de moteur synchrone à réluctance, comprenant
- un rotor (1), le rotor (1) étant pourvu de multiples ensembles de barrières magnétiques (101) dans une direction circonférentielle ;
- dans une direction radiale, chaque dit ensemble de barrières magnétiques (101) étant constitué d'une première région de barrière magnétique (2), d'une deuxième région de barrière magnétique (3), d'une troisième région de barrière magnétique (4) et d'une quatrième région de barrière magnétique (5), successivement de l'extérieur vers l'intérieur ;
- dans une direction axiale, une première ligne de contour extérieure (A) et une première ligne de contour intérieure (B) d'une projection de la première région de barrière magnétique (2) présentant chacune la forme d'un arc de cercle, **caractérisé en ce que** les lignes de contour extérieures (F, H, J) et les lignes de contour intérieures (E, G, I) de projections de la deuxième région de barrière magnétique (3), de la troisième région de barrière magnétique (4) et de la quatrième région de barrière magnétique (5) présentent chacune la forme d'une hyperbole à branche unique.

2. Rotor de moteur synchrone à réluctance selon la revendication 1, **caractérisé en ce que** la deuxième région de barrière magnétique (3), la troisième région de barrière magnétique (4) et la quatrième région de barrière magnétique (5) comprennent chacune des branches uniques de deux hyperboles, réparties de l'extérieur vers l'intérieur dans la direction radiale.

3. Rotor de moteur synchrone à réluctance selon l'une des revendications précédentes, **caractérisé en ce qu'**un premier pont de liaison (301), un deuxième pont de liaison (401) et un troisième pont de liaison (501) sont disposés à des positions situées au milieu respectivement de la deuxième région de barrière magnétique (3), de la troisième région de barrière magnétique (4) et de la quatrième région de barrière magnétique (5), le premier pont de liaison (301), le deuxième pont de liaison (401) et le troisième pont de liaison (501) se trouvant sur une première ligne de liaison (C), et la deuxième région de barrière magnétique (3) comprenant une première partie (302) et une deuxième partie (303) agencées symétriquement par rapport à la première ligne de liaison (C) ; la troisième région de barrière magnétique (4) comprenant une première partie (402) et une deuxième partie (403) agencées symétriquement par rapport à la première ligne de liaison (C), et la quatrième région de barrière magnétique (5) comportant une première partie (502) et une deuxième partie (503) agencées symétriquement par rapport à la première ligne de liaison (C).

4. Rotor de moteur synchrone à réluctance selon la revendication 3, **caractérisé en ce que** les premières parties (302, 402, 502) et les deuxièmes parties (303, 403, 503) correspondant à la deuxième région de barrière magnétique (3), à la troisième région de barrière magnétique (4) et à la quatrième région de barrière magnétique (5) comprennent chacune un premier bord latéral (3020, 4020, 5020) et un deuxième bord latéral (3030, 4030, 5030), les premiers bords latéraux (3020, 4020, 5020) étant des lignes de délimitation du premier pont de liaison (301), du deuxième pont de liaison (401) et du troisième pont de liaison (501) dans la direction circonférentielle, et les deuxièmes bords latéraux (3030, 4030, 5030) étant disposés à des positions sur le rotor (1) proches d'un bord extérieur dans la direction radiale.

5. Rotor de moteur synchrone à réluctance selon la revendication 3 ou 4, **caractérisé en ce qu'**une largeur du premier pont de liaison (301) est une première largeur (W₁), une largeur du deuxième pont de liaison (401) est une deuxième largeur (W₂) et une largeur du troisième pont de liaison (501) est une troisième largeur (W₃), la troisième largeur (W₃) étant supérieure à la deuxième largeur (W₂) et la deuxième largeur (W₂) étant supérieure à la première largeur (W₁).

6. Rotor de moteur synchrone à réluctance selon l'une des revendications précédentes, **caractérisé en ce que** la première région de barrière magnétique (2), la deuxième région de barrière magnétique (3), la troisième région de barrière magnétique (4) et la quatrième région de barrière magnétique (5) présentent toutes des largeurs différentes.

7. Rotor de moteur synchrone à réluctance selon la revendication 3 ou 4, **caractérisé en ce que** la première partie (302) de la deuxième région de barrière magnétique (3) présente une largeur différente à chaque position sur celle-ci, et la deuxième partie (303) de la deuxième région de barrière magnétique (3) présente une largeur différente à chaque position sur celle-ci ; la première partie (402) de la troisième région de barrière magnétique (4) présente une largeur différente à chaque position sur celle-ci, et la deuxième partie (403) de la troisième région de barrière magnétique (4) présente une largeur différente à chaque position sur celle-ci ; la première partie (502) de la quatrième région de barrière magnétique (5) présente une largeur différente à chaque position sur celle-ci, et la deuxième partie (503) de la quatrième région de barrière magnétique (5) présente une largeur différente à chaque position sur celle-ci ; et les premières parties (302, 402, 502) et les deuxièmes parties (303, 403, 503) correspondant à la deuxième région de barrière magnétique (3), à la troisième région de barrière magnétique (4) et à la quatrième région de barrière magnétique (5) s'élargissent à mesure qu'elles se rapprochent de la première ligne de liaison.

8. Rotor de moteur synchrone à réluctance selon l'une des revendications précédentes, **caractérisé en ce que** lesdits ensembles de barrières magnétiques (101) sont au nombre de huit.

9. Rotor de moteur synchrone à réluctance selon l'une des revendications précédentes, **caractérisé en ce que** la première région de barrière magnétique (2), la deuxième région de barrière magnétique (3), la troisième région de barrière magnétique (4) et la quatrième région de barrière magnétique (5) sont toutes des barrières magnétiques à air.

10. Rotor de moteur synchrone à réluctance selon l'une des revendications précédentes, **caractérisé en ce qu'**il comprend en outre une deuxième ligne de liaison (D), la deuxième ligne de liaison (D) étant perpendiculaire à la première ligne de liaison (C) ; la deuxième région de barrière magnétique (3) comprend une deuxième ligne de contour intérieure (E) et une deuxième ligne de contour extérieure (F), la troisième région de barrière magnétique (4) comprend une troisième ligne de contour intérieure (G) et une troisième ligne de contour extérieure (H), et la quatrième région de barrière magnétique (5) comprend une quatrième ligne de contour intérieure (I) et une quatrième ligne de contour extérieure (J) ; si la première ligne de liaison (C) est définie en tant qu'axe X et la deuxième ligne de liaison (D) en tant qu'axe Y, alors
il existe deux foyers F₁ (-c₁, 0) et F₂ (+c₁, 0) sur la première ligne de liaison (C), et tout point M₁ sur la deuxième ligne de contour intérieure (E) peut vérifier : $\left|\left|{M}_{1}{F}_{1}\right|-\left|{M}_{1}{F}_{2}\right|\right| = {2 a}_{1} , avec 0 < {2 a}_{1} < \left|{F}_{1}{F}_{2}\right| ;$
il existe deux foyers F₃ (-c₂, 0) et F₄ (+c₂, 0) sur la première ligne de liaison (C), et tout point M₂ sur la deuxième ligne de contour extérieure (F) peut vérifier : $\left|\left|{M}_{2}{F}_{3}\right|-\left|{M}_{2}{F}_{4}\right|\right| = {2 a}_{2} , avec 0 < {2 a}_{2} < \left|{F}_{3}{F}_{4}\right| ;$
il existe deux foyers F₅ (-c₃, 0) et F₆ (+c₃, 0) sur la première ligne de liaison (C), et tout point M₃ sur la troisième ligne de contour intérieure (G) peut vérifier : $\left|\left|{M}_{3}{F}_{5}\right|-\left|{M}_{3}{F}_{6}\right|\right| = {2 a}_{3} , avec 0 < {2 a}_{3} < \left|{F}_{5}{F}_{6}\right| ;$
il existe deux foyers F₇ (-c₄, 0) et F₈ (+c₄, 0) sur la première ligne de liaison (C), et tout point M₄ sur la troisième ligne de contour extérieure (H) peut vérifier : $\left|\left|{M}_{4}{F}_{7}\right|-\left|{M}_{4}{F}_{8}\right|\right| = {2 a}_{4} , avec 0 < {2 a}_{4} < \left|{F}_{7}{F}_{8}\right| ;$
il existe deux foyers F₉ (-c₅, 0) et F₁₀ (+c₅, 0) sur la première ligne de liaison (C), et tout point M₅ sur la quatrième ligne de contour intérieure (I) peut vérifier : $\left|\left|{M}_{5}{F}_{9}\right|-\left|{M}_{5}{F}_{10}\right|\right| = {2 a}_{5} , avec 0 < {2 a}_{5} < \left|{F}_{9}{F}_{10}\right| ;$
il existe deux foyers F₁₁ (-c₆, 0) et F₁₂ (+c₆, 0) sur la première ligne de liaison (C),
et tout point M₆ sur la quatrième ligne de contour extérieure (J) peut vérifier : $\left|\left|{M}_{6}{F}_{11}\right|-\left|{M}_{6}{F}_{12}\right|\right| = {2 a}_{6} , avec 0 < {2 a}_{6} < \left|{F}_{11}{F}_{12}\right| .$
